# EUROPEAN PATENT SPECIFICATION

(11) **EP 1 768 419 B1**
(45) Date of publication and mention of the grant of the patent: **06.10.2010**
(21) Application number: 05736668.4
(22) Date of filing: 27.04.2005
(51) Int. Cl.: H04N 7/32, G11B 20/10, H04N 5/91, H04N 5/92, H04N 5/93

(54) **MOVING PICTURE ENCODING DEVICE, MOVING PICTURE RECORDING DEVICE, AND MOVING PICTURE REPRODUCTION DEVICE**
CODIERUNGSEINRICHTUNG FÜR BEWEGLICHE BILDER, AUFZEICHNUNGSEINRICHTUNG FÜR BEWEGLICHE BILDER UND WIEDERGABEEINRICHTUNG FÜR BEWEGLICHE BILDER
DISPOSITIF DE CODAGE D'IMAGE ANIMÉE, DISPOSITIF D'ENREGISTREMENT D'IMAGE ANIMÉE ET DISPOSITIF DE REPRODUCTION D'IMAGE ANIMÉE

(30) Priority: 21.06.2004 JP 2004182095
(43) Date of publication of application: 28.03.2007
(60) Divisional application: 09002882.0
(73) Proprietor: MITSUBISHI ELECTRIC CORPORATION, Chiyoda-ku Tokyo 100-8310 (JP)
(72) Inventor: SUKENO, Junji Mitsubishi Electric Corporation, Chiyoda-ku Tokyo 1008310 (JP); HATANO, Yoshiko Mitsubishi Electric Corporation, Chiyoda-ku Tokyo 1008310 (JP)
(74) Representative: Pfenning, Meinig & Partner GbR
(86) International application number: PCT/JP2005/007971
(87) International publication number: WO 2005/125217

(56) References cited:
- EP-A- 1 098 530
- EP-A- 1 193 973
- JP-A- 10 304 372
- JP-A- 2002 010 254
- JP-A- 2002 010 254
- JP-A- 2002 112 197
- JP-A- 2003 047 031
- JP-A- 2003 047 031
- US-A1- 2002 031 178

## Description

### TECHNICAL FIELD

The present invention relates to moving picture encoding of a television broadcast signal, and particularly to a moving picture encoding device for encoding a broadcast signal of a television broadcast including a television program period and a commercial period in accordance with a moving picture encoding method represented by ITU-T (the International Telecommunication Union - Telecommunication sector) Recommendation H.26x and MPEG (Moving Picture Experts Group) Standard of the ISO/IEC (International Organization for Standardization / International Electrotechnical Commission), a moving picture recording device for recording data encoded by the moving picture encoding device, a moving picture reproducing device for reproducing encoded data in accordance with a reproducing method based on a commercial boundary picture, a moving picture encoding method, a program for causing an electronic information processing device to execute the moving picture encoding, and a recording medium storing this program.

### BACKGROUND ART

In general, a television broadcast, especially a free broadcast, includes a commercial period before, after, or at some midpoint of a television program period. Further, a "television program period" means a broadcast period of a program main portion, which is a period other than a commercial period in a television broadcast, and a "commercial period (CM period)" means a broadcast period, which is broadcasted before, after, or at some midpoint of a television program period in a television broadcast and which is a period other than the program main portion.

A commercial (hereafter also abbreviated to a CM) is a very effective means for an advertiser to present information of a product to the audience. Therefore, it is important for an advertiser and an advertising agent who has produced the CM that the CM is surely broadcasted in accordance with the contract. To facilitate the confirmation work, a technology for recording all materials broadcasted on TV and taking out the broadcasted CMs from the materials is needed. CM periods must be correctly detected to take out the broadcasted CMs. A CM period detection device has been proposed to respond to the needs (see Patent Document 1, for example). This CM period detecting method adopts measures for preventing the wrong detection of a CM period or the failure of detecting a CM period by evaluating "continuity of CMs", which is a property that the broadcasting for 15 seconds, for example, of each of a plurality of CMs included in a single CM period is performed repeatedly (in the present application, each of the CMs included in a single CM period is referred to as a "CM portion"). Further, a method of storing the information of the detected CM period in a storage device such as a database and confirming the broadcasted CMs in accordance with the stored information is disclosed.
Patent Document 1: Japanese Patent Application Kokai (Laid-Open) Publication No. 2003-47031 (pages 5 and 11, FIG. 1 and FIG. 16)

Patent document EP1193973 discloses an encoding apparatus that detects commercial sections and records an mpeg bitstream with additional markers that identify the commercial sections.

### DISCLOSURE OF INVENTION

### PROBLEMS TO BE SOLVED BY THE INVENTION

However, since the conventional CM period detection device requires a storage device or the like for storing the detected information, the configuration of the device becomes complicated, and the device becomes expensive. Further, if the information of the original moving picture is recorded in an exchangeable storage medium and the information stored in the storage medium is reproduced by another reproducing device, the reproducing device cannot show just CMs by extracting the CMs because the information of the detected CM periods is not recorded in the storage medium. The above-mentioned conventional CM period detection device is a special device designed only for use by professionals such as advertisers.

In recent years, CMs have become important not only to provide information of a product to the audience but also to improve the image of a company. For this reason, CMs have become sophisticated year by year, and many very imaginative and original commercials are worthy of being referred to as video works. Because of the improved quality of CMs, some young audience prefers the CMs to the program main portions. On the other hand, some other audience wants to watch just television program periods. An inexpensive device that can satisfy the requirements of both of the above-mentioned audiences is needed.

The present invention has been made to solve the problems in prior art as described earlier. An object of the present invention is to provide a moving picture encoding device that does not require a storage means (such as an internal large-capacity semiconductor memory and an internal hard disk) for recording encoded information of a moving picture other than a moving picture recording device and can embed information of a commercial boundary when encoding a television broadcast, a moving picture recording device that can record encoded data including the information of a commercial boundary, and a moving picture reproducing device that can reproduce the moving picture in a reproduction mode based on the information of the commercial boundary.

### MEANS OF SOLVING THE PROBLEM

A moving picture encoding device includes: an encoding means for encoding a broadcast signal of a television broadcast including a television program period and a commercial period that is other than the television program period, thereby outputting an encoded data of the broadcast signal; an encoding control means for controlling the encoding means so as to intra-code periodic pictures at constant time intervals and to inter-code other pictures between the periodic intra-coded pictures; and a commercial boundary detection means for detecting a program-commercial boundary which includes a boundary when a television program period changes to a commercial period and a boundary when a commercial period changes to a television program period, thereby outputting program-commercial boundary information; the encoding control means controlling the encoding means so as to intra-code a first boundary position picture positioned on the program-commercial boundary in accordance with the program-commercial boundary information.

Further, a moving picture recording device includes: the moving picture encoding device recited above; and a recording means for recording the encoded data output from the encoding means.

Furthermore, a moving picture reproducing device includes: a decoding means for decoding encoded data generated by intra-coding and inter-coding of a broadcast signal of a television broadcast including a television program period and a commercial period that is other than the television program period, the intra-coding being performed with respect to periodic pictures at constant time intervals; a commercial boundary determination means for determining an intra-coded picture other than periodic intra-coded pictures at constant time intervals to be a program-commercial boundary, which includes a boundary when the television program period changes to the commercial period and a boundary when the commercial period changes to the television program period, or a commercial-commercial boundary between a plurality of commercial portions broadcast within the commercial period; and a decoding control means for controlling the decoding by the decoding means, in accordance with the program-commercial boundary and the commercial-commercial boundary determined by the commercial boundary determination means.

### EFFECTS OF THE INVENTION

In the moving picture encoding device of the present invention, since information of a commercial boundary are embedded in the encoded data when a television broadcast is encoded, an effect that a commercial period can be detected from the encoded data is obtained.

Further, since the moving picture recording device of the present invention records the encoded data including the embedded information of a commercial boundary, an effect that a commercial period can be detected from the recorded encoded data is obtained.

Furthermore, since the moving picture reproducing device of the present invention allows a program-commercial boundary and a commercial-commercial boundary to be detected from the encoded data in accordance with intra-coded pictures other than intra-coded pictures presented at constant time intervals, an effect that a moving picture can be reproduced in a reproduction mode (including a CM selecting and extracting reproduction mode, a program selecting and extracting reproduction mode, and a CM fast forward reproduction mode, for example) based on the detected information.

### BRIEF DESCRIPTION OF THE DRAWINGS

FIG. 1 is a schematic block diagram showing a configuration of a moving picture encoding device according to the first embodiment of the present invention;
FIG. 2 is a schematic block diagram showing a configuration of a CM boundary detector in the first embodiment, second embodiment, third embodiment, and fourth embodiment of the present invention;
FIG. 3 is a schematic block diagram showing a configuration of an encoder in the first embodiment, second embodiment, third embodiment, and fourth embodiment of the present invention;
FIGs. 4A, 4B1 - 4B3 and 4C are diagrams for explaining an encoding method when a CM boundary is provided by the encoder in the moving picture encoding device according to the first embodiment of the present invention;
FIGs. 5A, 5B1 - 5B3 and 5C are diagrams for explaining an encoding method when a CM boundary is provided by the encoder in the moving picture encoding device according to the first embodiment of the present invention;
FIGs. 6A, 6B1 - 6B3 and 6C are diagrams for explaining an encoding method when a CM boundary is provided by the encoder in the moving picture encoding device according to the first embodiment of the present invention;
FIG. 7 is a schematic block diagram showing a configuration of a moving picture recording device according to the second embodiment of the present invention;
FIG. 8A is a diagram showing a display example of CM periods by a confirmation operation section of the moving picture recording device according to the second embodiment, third embodiment, fourth embodiment and fifth embodiment of the present invention, FIG. 8B is a diagram for explaining positions of intra-coded frames, and FIG. 8C is a magnified view of a period Pa in FIG. 8B;
FIG. 9A is a diagram showing a display example of CM periods (a case including a misjudgment) by a confirmation operation section of the moving picture recording device according to the second embodiment, third embodiment, fourth embodiment and fifth embodiment of the present invention, FIG. 9B is a diagram for explaining positions of intra-coded frames, and FIG. 9C is a magnified view of a period Pb in FIG. 9B;
FIG. 10A is a diagram showing a display example of CM periods (a case including a misjudgment) by a confirmation operation section of the moving picture recording device according to the second embodiment, third embodiment, fourth embodiment and fifth embodiment of the present invention, FIG. 10B is a diagram for explaining positions of intra-coded frames, and FIG. 10C is a magnified view of a period Pc in FIG. 10B;
FIG. 11 is a schematic block diagram showing a configuration of the moving picture recording device according to the third embodiment and fourth embodiment of the present invention;

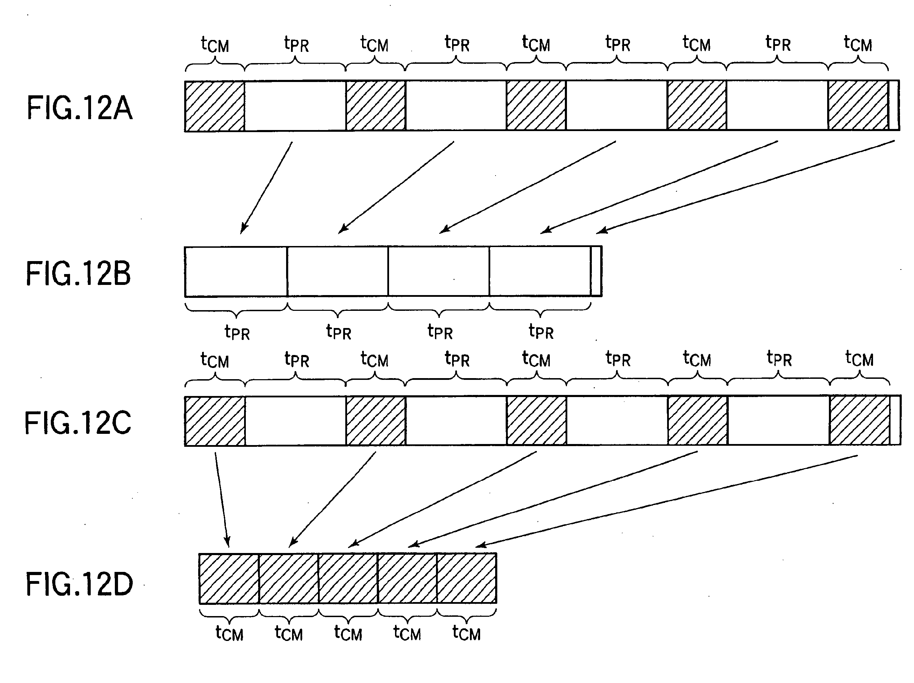

FIG. 12A is a diagram showing a display example of CM periods (before editing by a data editor) by a confirmation operation section of the moving picture recording device according to the third embodiment of the present invention, FIG. 12B is a diagram showing a display example of television program periods (after editing by a data editor), FIG. 12C is a diagram showing a display example of CM periods (before editing by the data editor) by a confirmation operation section of the moving picture recording device according to the fourth embodiment of the present invention, and FIG. 12D is a diagram showing a display example of CM periods (after editing by a data editor) ;
FIG. 13A is a diagram showing a display example of CM periods (before editing by a data editor) by a confirmation operation section of the moving picture recording device according to the third embodiment and fourth embodiment of the present invention, and FIG. 13B is a diagram showing a display example of CM periods (after editing by the data editor); and
FIG. 14 is a schematic block diagram showing a configuration of a moving picture reproducing device according to the fifth embodiment of the present invention.

### EXPLANATION OF THE REFERENCE MARKS

1 CM boundary detector; 2 memory; 3 encoder; 4 encoding controller; 11 scene change detector; 12 silent period detector; 13 CM period determination section; 32 subtractor; 33 DCT circuit; 34 quantization circuit; 35 DC/AC predictor; 36 variable-length coding circuit; 37 inverse quantization circuit; 38 inverse DCT circuit; 39 adder; 40 decoded image memory; 41 predicted image creation circuit; 42 motion detection circuit; 43 motion vector prediction circuit; 80 recording section; 81 confirmation operation section; 82 decoder; 83 decoding memory; 84 data editor; 85 CM boundary determination section; 86 decoding processing controller; 101 moving picture encoding device; 102, 103 moving picture recording device; 104 moving picture reproducing device; Ia periodic intra-coded frames (pictures) existing at constant time intervals; Ib,
Ib2 a periodic intra-coded frame (picture) existing on a CM boundary; Ib1 an intra-coded frame (picture) with respect to the CM boundary which coincides a periodic intra-coded frame Ia; Ib1' a one-frame-delayed intra-coded frame (picrure) with respect to Ib1;
Ic an inter-coded frame (picture) positioned at any one of periodic positions existing at constant time intervals, which has been inter-coded instead of intra-coded because an intra-coded frame (picture) corresponding to a CM boundary coincides with any one of the intra-coded frames (pictures) existing at constant time intervals; CM1 - CM4 CM portions successively existing within a CM period.

### BEST MODE FOR CARRYING OUT THE INVENTION

Embodiments of the present invention will be described below in detail with reference to the accompanying drawings. In the description below, a case adopting mostly MPEG-4 as a moving picture encoding method.

### FIRST EMBODIMENT

In general, a moving picture encoding method typified by MPEG-4 compresses data by using the spatial and temporal correlations with an input video signal. Variable-length coding is performed in a predetermined sequence using data obtained from the spatial and temporal compression, thereby generating a bit stream.

In MPEG-4, a whole displayed picture (composite image) includes images (objects) of plural image series, so that an image plane of each image series at each display time is referred to as a video object plane (hereafter referred to as a "VOP"). If a whole displayed picture is formed from images of a single image series, the VOP agrees with a frame of MPEG-1 or MPEG-2 (a picture in MPEG-2). In the description below, a whole displayed picture is comprised of images of a single image series, for the sake of simplicity of the description. In that case, a VOP is equivalent to a "frame".

A frame has a luminance signal and a color difference signal, and consists of a plurality of macroblocks. Generally, a macroblock is formed by a 16 by 16 matrix of pixels for the luminance signal. In MPEG-4 image encoding, an amount of information is compressed by a method such as spatial and temporal compression in units of a macroblock.

Spatial compression is performed by quantizing a signal obtained by conversion from the time domain to the frequency domain by the discrete cosine transform (hereafter referred to as "DCT"), which is a kind of orthogonal transformation. Further, motion compensation is used as temporal compression.

Further, the data compression in units of a frame includes a spatial intra-coding (hereafter also referred to as "intra-frame coding" or "intra-picture coding") which performs encoding just by spatial compression in the same picture, and an inter-coding (hereafter referred to as "inter-frame coding" or "inter-picture coding") which performs encoding using temporal compression based on correlation between pictures.

A moving picture encoding device must output a bit stream of a specified coded data amount in accordance with a predetermined encoding parameter. Further, the moving picture encoding device must control an amount of coded data to be generated, estimating the occupancy of the buffer (virtual buffer verifier) (hereafter referred to as a "VBV buffer") on the side of a decoding device that receives the bit stream, so that no overflow or underflow occurs in the VBV buffer on the side of the moving picture encoding device. In the moving picture encoding device, an amount of the coded data to be generated is specified for each of the macroblocks forming a frame, and an amount of the coded data to be generated is controlled in units of a frame in accordance with a quantization parameter for quantizing a DCT coefficient. Generally, an increased quantization parameter decreases the amount of the coded data to be generated, and a decreased quantization parameter increases the amount of the coded data to be generated. That is, the amount of the coded data to be generated and the quantization parameter are in inverse proportion. This characteristic can be used to adjust the amount of the coded data to be generated.

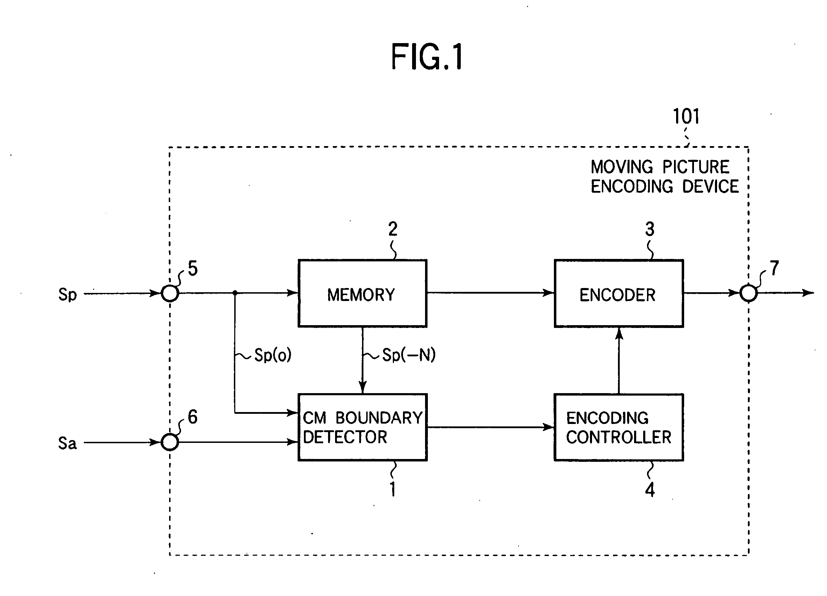

FIG. 1 is a schematic block diagram showing a configuration of a moving picture encoding device 101 according to the first embodiment of the present invention. As shown in FIG. 1, the moving picture encoding device 101 includes a commercial boundary detector (CM boundary detector) 1, a memory 2, an encoder 3, an encoding controller 4, input terminals 5 and 6, and an output terminal 7. A television broadcast video signal Sₚ is input to the input terminal 5, and a television broadcast audio signal Sₐ is input to the input terminal 6. The CM boundary detector 1 detects and outputs a boundary on which a television program period (program main portion period) changes to a commercial period or a commercial period changes to a television program period (hereafter referred to as a "program-commercial boundary (program-CM boundary)") and a boundary between a plurality of commercial portions broadcasted in one commercial period (hereafter referred to as a "commercial-commercial boundary (CM-CM boundary)"), in accordance with the television broadcast video signal Sₚ and the audio signal Sₐ input respectively from the input terminals 5 and 6. The program-CM boundary and the CM-CM boundary will be hereafter collectively referred to as a "commercial boundary (CM boundary)" in this application. The memory 2 receives and temporarily stores the television broadcast video signal Sₚ input through the input terminal 5. The encoder 3 encodes the video signal Sₚ output from the memory 2 using an encoding method such as MPEG-2, MPEG-4, or ITU-T Recommendation H.263, etc. The encoded data (stream data) created by the encoder 3 is output from the output terminal 7 and transmitted to, for example, a recording section, which is not shown. The encoding controller 4 determines the encoding method in accordance with the CM boundary information output from the CM boundary detector 1 to control the encoder 3.

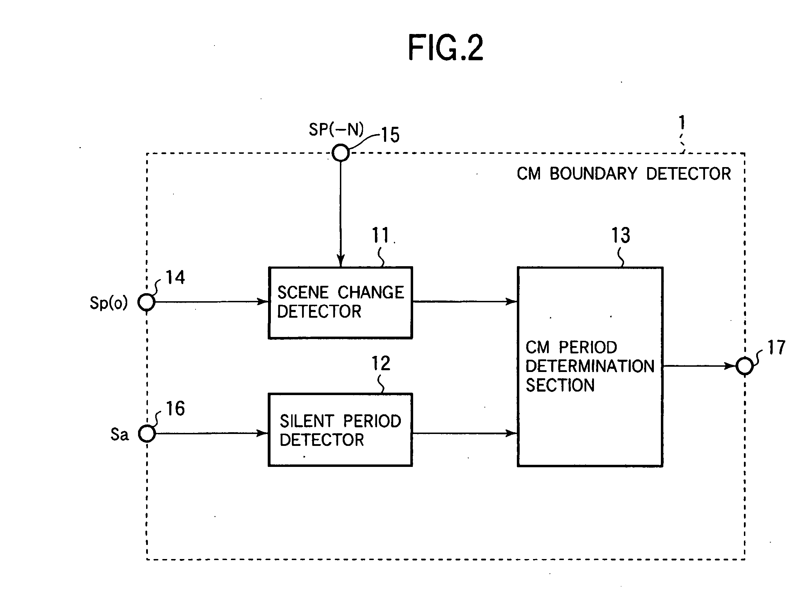

FIG. 2 is a schematic block diagram showing a configuration of the CM boundary detector 1 shown in FIG. 1. As shown in FIG. 2, the CM boundary detector 1 includes a scene change detector 11, a silent period detector 12, a commercial period determination section (CM period determination section) 13, input terminals 14, 15 and 16, and an output terminal 17. A television broadcast video signal Sₚ(0) of the current frame is input to the input terminal 14. A television broadcast video signal Sₚ(-N) of the Nth (N is a positive integer) frame preceding the current frame is input to the input terminal 15. A television broadcast audio signal Sₐ is input to the input terminal 16. The scene change detector 11 detects a change (hereafter referred to as a "scene change") in pictures of the television broadcast video signal between the current frame input through the input terminal 14 and the Nth preceding frame input through the input terminal 15. The silent period detector 12 detects a silent period tₙₒ in accordance with the audio signal Sₐ input through the input terminal 16. The CM period determination section 13 determines a CM boundary and a CM period in accordance with the scene change information output from the scene change detector 11 and the silent period information output from the silent period detector 12, thereby outputting CM boundary information. The output terminal 17 outputs the CM boundary information output from the CM period determination section 13 to the encoding controller 4.

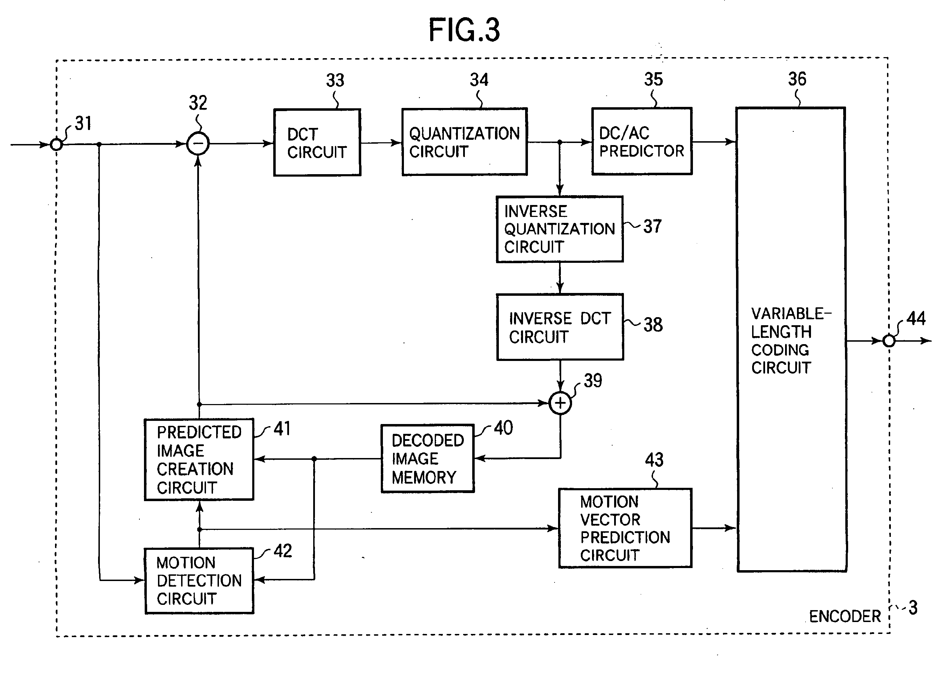

FIG. 3 is a schematic block diagram showing a configuration of the encoder 3 shown in FIG. 1. As shown in FIG. 3, the encoder 3 includes an input terminal 31, a subtractor 32, a DCT circuit 33, a quantization circuit 34, a DC/AC predictor 35, a variable-length coding circuit 36, an inverse quantization circuit 37, an inverse DCT circuit 38, an adder 39, a decoded image memory 40, a predicted image creation circuit 41, a motion detection circuit 42, a motion vector prediction circuit 43, and an output terminal 44. A video signal read from the memory 2 (FIG. 1) in units of a macroblock is input to the input terminal 31. The subtractor 32 outputs a difference between a video signal input from the input terminal 31 and a predicted image output from the predicted image creation circuit 41. The DCT circuit 33 performs DCT on the output of the subtractor 32, thereby outputting a DCT coefficient. The quantization circuit 34 quantizes the DCT coefficient output from the DCT circuit 33. The DC/AC predictor 35 predicts a DC coefficient and an AC coefficient in accordance with a DC/AC coefficient of a block adjacent to the current block. The inverse quantization circuit 37 inverse-quantizes the quantized DCT coefficient output from the quantization circuit 34. The inverse DCT circuit 38 performs an inverse DCT of the output of the inverse quantization circuit 37. The adder 39 adds an output of the inverse DCT circuit 38 and an output of the predicted image creation circuit 41 to obtain a decoded image. The decoded image memory 40 stores the decoded image provided by the adder 39. The motion detection circuit 42 detects a motion vector in accordance with a decoded image output from the decoded image memory 40 and a video signal input from the memory 2 (FIG. 1) through the input terminal 31 in units of a macroblock. The predicted image creation circuit 41 creates a predicted image corresponding to the current video signal from a decoded image input from the decoded image memory 40 in accordance with a motion vector output from the motion detection circuit 42, thereby outputting the predicted image to the subtractor 32 and the adder 39. The motion vector prediction circuit 43 predicts a motion vector to output a predicted vector to the variable-length coding circuit 36. The variable-length coding circuit 36 variable-length-codes a predicted coefficient output from the DC/AC predictor 35 and a motion vector output from the motion vector prediction circuit 43 together with additional information such as a quantization parameter, thereby outputting the result as a bit stream.

The operation of a moving picture encoding device 101 according to the first embodiment will be described with reference to FIG. 1 to FIG.3. As shown in FIG. 1, the television broadcast video signal is input through the input terminal 5 of the moving picture encoding device 101 to the memory 2 and the CM boundary detector 1. There are the interlace type and the non-interlace type as a type of television broadcast video signals. Further, there are the field mode and the frame mode as a mode of television broadcast video signals. Although the present invention can be applied to any types and any modes, video signals of the interlace type in the frame mode input in frames will be described below. The video signal input to the memory 2 is output to the CM boundary detector 1 with a delay of one or more frames and then output to the encoder 3 with the macroblocks rearranged. In the similar manner to the video signal, the television broadcast audio signal is input to the CM boundary detector 1.

As shown in FIG. 2, in the CM boundary detector 1, a current frame video signal (hereafter also referred to as a "current frame image") Sₚ(0) of the television broadcast, which is input through the input terminal 14, and an Nth preceding frame video signal (hereafter also referred to as an "Nth preceding frame image") Sₚ(-N) input through the input terminal 15 are input to the scene change detector 11. The scene change detector 11 takes a sum of an absolute difference between luminance signals of the current frame image Sₚ(0) and the Nth preceding frame image Sₚ(-N) in each pixel and compares the sum with a predetermined value. If the calculated sum of the absolute differences exceeds the predetermined value, it is assumed that a scene change occurs and information indicating the frame in which the scene change occurs is output to the CM period determination section 13 as the scene change information. Further, the scene change detection method in the scene change detector 11 is not limited to the method described above, and another determination method based on a temporal change in signal level may be used.

Further, as shown in FIG. 2, the television broadcast audio signal Sₐ is input to the silent period detector 12. The silent period detector 12 detects a silent period tₙₒ of a television broadcast. Generally, silent periods tₙₒ of several tens of milliseconds are provided before and after a CM (that is, before and after a CM period, and before and after each of plural CM portions included in a CM period) of a television broadcast. Accordingly, when the CM boundary is detected, a silent period tₙₒ of a television broadcast is detected. In the first embodiment, the CM boundary and the CM period are determined in accordance with the scene change information output from the scene change detector 11 and the silent period information output from the silent period detector 12. For example, in general television broadcasting, the CM portions included in a CM period often have a regular length such as 15 seconds or 30 seconds (accordingly, there is a high possibility that a scene change or a silent period tₙₒ alternating at intervals of 15 seconds or 30 seconds is a boundary between the current CM portion and a next CM portion). Moreover, there is a strong tendency that a plurality of CM portions is broadcasted in succession (accordingly, there is a high possibility that a repetition of scene changes and silent periods tₙₒ is a boundary between a CM portion and a next CM portion). These characteristics can be used to improve the reliability of CM determination. Unlike the silent period detector 12, a CM boundary may be detected or the reliability of CM boundary detection may be improved by using a mode change among a monophonic audio signal, a stereophonic audio signal, a bilingual audio signal, and other audio signals, or a sound level change (the sound level of CM is generally high). The CM boundary information determined by the CM period determination section 13 is output through the output terminal 17 to the encoding controller 4.

The video signal Sₚ input to the memory 2 is read in units of a macroblock and supplied to the encoder 3. The video signal input to the encoder 3 is supplied through the input terminal 31 to the subtractor 32 and the motion detection circuit 42. The subtractor 32 performs subtraction between the video signal input through the input terminal 31 and the predicted image output from the predicted image creation circuit 41, thereby outputting the difference (the result of the subtraction) to the DCT circuit 33. The DCT circuit 33 performs the DCT of the difference input from the subtractor 32, thereby outputting the DCT coefficient. The DCT coefficient output from the DCT circuit 33 is supplied to the quantization circuit 34 and is then quantized. The DCT coefficient (hereafter referred to as a "quantized DCT coefficient") quantized by the quantization circuit 34 is supplied to the DC/AC predictor 35 and the inverse quantization circuit 37. The DC/AC predictor 35 predicts the DC coefficient and the AC coefficient from the input quantized DCT coefficient in accordance with the DC/AC coefficient of a block adjacent to the current block and then outputs the result to the variable-length coding circuit 36. Further, the inverse quantization circuit 37 inverse-quantizes the quantized DCT coefficient output from the quantization circuit 34 and then outputs the result to the inverse DCT circuit 38. The inverse DCT circuit 38 performs the inverse DCT of the output from the inverse quantization circuit 37 and then outputs the result to the adder 39. The adder 39 sums up the output of the inverse DCT circuit 38 and the predicted image output from the predicted image creation circuit 41, creates a decoded image, and outputs the decoded image to the decoded image memory 40. The decoded image stored in the decoded image memory 40 is output to the motion detection circuit 42 and the predicted image creation circuit 41. The motion detection circuit 42 detects a motion vector from the decoded image output from the decoded image memory 40 and the video signal supplied from the memory 2 through the input terminal 31 in units of a macroblock, and outputs the detected vector to the predicted image creation circuit 41 and the motion vector prediction circuit 43. The predicted image creation circuit 41 creates a predicted image corresponding to the current video signal from the decoded image read from the decoded image memory 40 in accordance with the motion vector output from the motion detection circuit 42. The motion vector prediction circuit 43 predicts a motion vector from the motion vector output from the motion detection circuit 42 and outputs the predicted vector to the variable-length coding circuit 36. The variable-length coding circuit 36 variable-length-codes the predicted coefficient output from the DC/AC predictor 35 and the motion vector output from the motion vector prediction circuit 43 together with additional information such as quantization parameters, and outputs the result from the output terminal 7 as a bit stream.

The encoding controller 4 controls encoding (intra-coding and inter-coding) in the encoder 3 in accordance with the CM boundary information detected by the CM boundary detector 1. As an example, MPEG-4 intra-coding and inter-coding will be briefly described.

Intra-coding is a type of encoding also referred to as intra-encoding. This type of encoding divides an input image into blocks and performs quantization through block-by-block DCT of blocks to perform variable-length coding. The encoded VOP is an I-VOP, which is hereafter referred also to as an "intra-picture-coded frame" in the present application.

In contrast to this, in accordance with the VOPs encoded by motion detection after the I-VOP, a predicted macroblock having the smallest difference from the target macroblock is detected. A signal indicating the amount of motion to the predicted macroblock with the smallest difference from the target macroblock is referred to as a "motion vector". Inter-coding is a type of encoding also referred to as inter-encoding. This type of encoding obtains a difference signal between a predicted macroblock and the macroblock to be encoded and performs the DCT of the difference signal to perform variable-length-coding of the quantized DCT coefficient together with the motion vector and the quantization width. In the present application, the inter-coded frame is also referred to as an "inter-picture-coded frame".

Further, the intra-coding and inter-coding described above can be controlled in units of a macroblock as well as in units of a VOP (a picture or a frame). If a distinction must be made between the two types of encoding, encoding in units of a VOP is indicated as a "picture type", and encoding in units of a macroblock is indicated as a "macroblock type".

The operation of the encoder 3 which performs intra-coding and inter-coding will next be described. In intra-coding performed by the encoder 3, since a predicted image is not created, a video signal is supplied from the memory 2 to the DCT circuit 33 in units of a macroblock. The DCT circuit 33 outputs the DCT coefficient of the video signal obtained by the DCT of each macroblock of the video signal. The DCT coefficient of the video signal output by the DCT circuit 33 is quantized by the quantization circuit 34 and then DC/AC-predicted by the DC/AC predictor 35, and the variable-length coding circuit 36 variable-length-codes the result together with additional information such as quantization parameters and outputs the result as a bit stream.

On the other hand, in inter-coding by the encoder 3, the subtractor 32 outputs the difference between the predicted image output from the predicted image creation circuit 41 and the video signal output from the memory 2 in units of a macroblock. The DCT circuit 33 outputs a DCT coefficient obtained by the DCT of the difference signal between the predicted image and the video signal. The DCT coefficient of the difference signal is quantized by the quantization circuit 34 and DC/AC-predicted by the DC/AC predictor 35, and the variable-length coding circuit 36 variable-length-codes the result together with additional information such as a motion vector and quantization parameters, and outputs the result as a bit stream.

Next, the operation to control the encoder 3 by the encoding controller 4 will be described. The encoding controller 4 requests the encoder 3 to perform intra-coding at constant time intervals. A bit stream created through periodic intra-coding makes it easier to perform fast forward/reverse play in reproduction. To be more specific, fast forward/reverse play can be implemented by finding an intra-coded frame from the bit stream or an MP4 or other systemized moving picture file (its internal table) and performing reproduction (that is, decoding) while skipping each sequence up to the intra-coded frame.

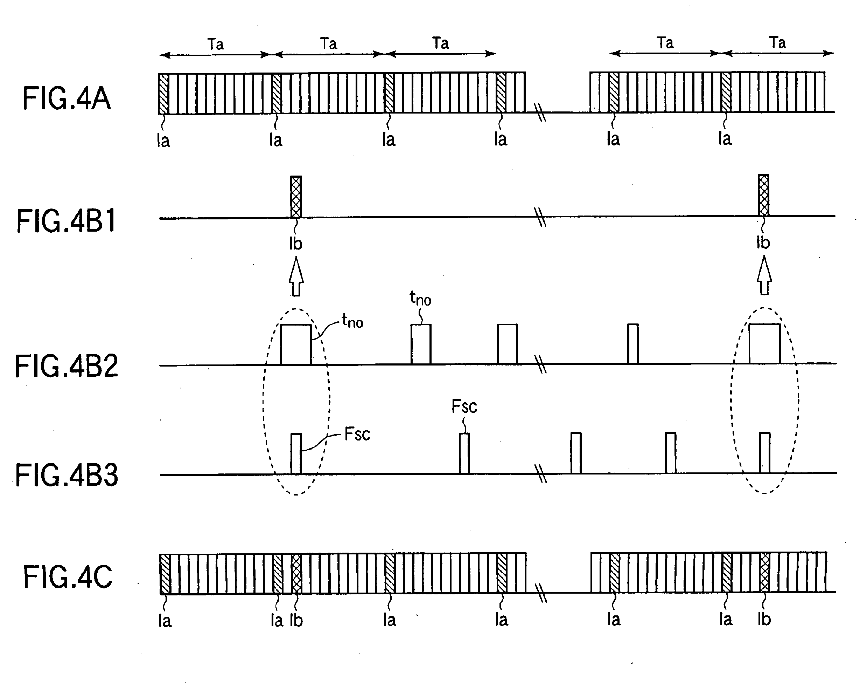

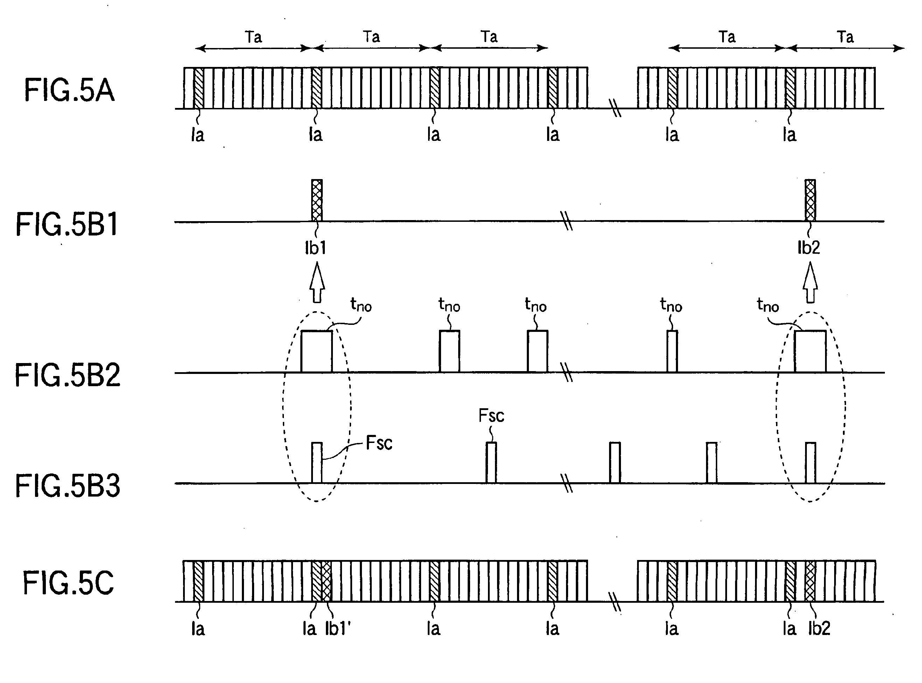

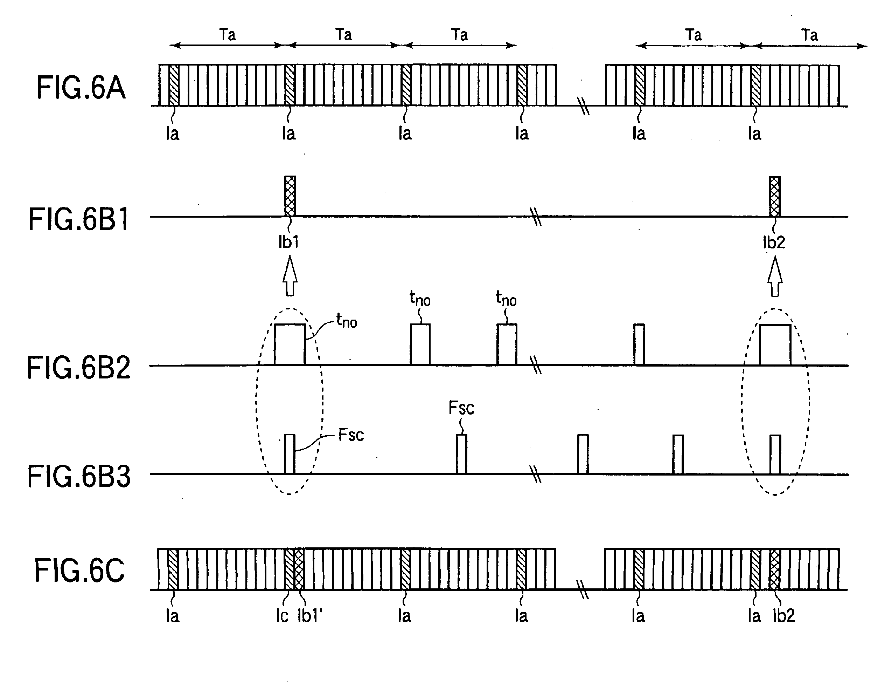

Encoding of a television broadcast including a CM period will be described in further detail with reference to FIGs. 4A, 4B1 - 4B3 and 4C, FIGs. 5A, 5B1 - 5B3 and 5C, and FIGs. 6A, 6B1 - 6B3 and 6C.

As shown in FIG. 4A, the encoder 3 performs the normal operation of intra-coding at constant time intervals of Ta (intra-coded picture (hatched areas in FIG. 4A) marked with "Ia"), as controlled by the encoding controller 4 and performs inter-coding (white areas excluding the hatched areas in FIG. 4A) of pictures other than the intra-coded pictures Ia.

Further, as shown in FIG. 4B3, the scene change detector 11 detects a frame F_{sc} where a scene change occurs (referred to as a "scene change frame (or picture)"). Furthermore, as shown in FIG. 4B2, the silent period detector 12 detects a silent period tₙₒ. If the scene change frame output from the scene change detector 11 coincides with the silent period tₙₒ output from the silent period detector 12, both a scene change and a silent period tₙₒ occurs simultaneously, which is a characteristic of the CM boundary. The scene change frame or picture F_{sc} is assumed to be a CM boundary, and the position of the CM boundary is detected. Unlike the silent period detector 12, the CM boundary may be detected by using a mode change in audio signal among monophonic, stereophonic, bilingual, and the like, or a sound level change (that is, a great change in sound level).

In the first embodiment, as shown in FIG. 4B1, a frame in the position of change from the television program period to the CM period, a frame in the position of change from the CM period to the television program period, and a frame in the position of change from a CM portion to a next CM portion within a CM period (each of these frames is referred to as a "CM boundary position frame (or picture)") are changed from inter-coded frames to intra-coded frames or pictures. Consequently, as shown in FIG. 4C, the encoded data is obtained by intra-coding at regular interval of frames (intra-coded pictures Ia at constant time intervals of frames) and intra-coding of CM boundary position frames (the intra-coded frame of a CM boundary position frame is marked with Ib). The intra-coded frames Ib excluding the intra-coded frames Ia at constant time intervals can be detected from the encoded data, so that CM boundaries can be found and CM periods can be skipped or fast-forwarded, for example, when the video is reproduced.

FIGs. 5A, 5B1 to 5B3 and 5C show that the scene change frame output from the scene change detector 11 and the CM boundary position frame detected from the silent period tₙₒ output from the silent period detector 12 coincide with the frame subjected to the normal operation of intra-coding at constant time intervals. At this time, as shown in FIG. 5C, intra-coding is performed by delaying the frame to be intra-coded with respect to the CM boundary position frame created as shown in FIGs. 5B1 to 5B3 by one frame (Ib1' in FIG. 5C). The frame may be delayed by several frames not by one frame. A frame (or picture) intra-coded with a delay of one or several frames from the reference "boundary position frame (or picture)" is also referred to as a "pseudo-boundary position frame (or picture)" hereafter. In a change from a television program period to a CM period, or the like, several first frames of a CM period are left as encoded data. The frames of the corresponding period can be skipped by conducting processing of "Not-Coded type (macroblocks without a DCT coefficient) for example)". In a change from a CM period to a television program period, several first frames of the television program period are skipped or deleted in reproduction.

Like FIGs. 5A, 5B1 - 5B3 and 5C, FIGs. 6A, 6B1 - 6B3 and 6C are diagrams showing that the scene change frame output from the scene change detector 11 and the CM boundary position frame detected from the silent period tₙₒ output from the silent period detector 12 coincide with the frame to be intra-coded at constant time intervals in the normal operation. At this time, as shown in FIG. 6C, the frame to be intra-coded (Ib1 in FIG. 6B1) is delayed by one frame (Ib1' in FIG. 6C) with respect to the CM boundary position frame created in FIGs. 6B1 to 6B3 and intra-coded, and the overlapping frame to be intra-coded at constant time intervals (Ic in FIG. 6C) is inter-coded. The intra-coded frame determines the reproduction (stop) unit of fast forward/reverse play in reproduction. Avoiding unnecessary intra-coding of a nearby frame as shown in FIG. 6C is effective because it leads to the effective use of the information amount and results in the assignment of the information amount to a necessary frame. The frame (Ib1' in FIG. 6C) may be delayed not by one frame but by a predetermined number of frames greater than or equal to two frames.

As has been described above, in the moving picture encoding device 101 according to the first embodiment, the encoding controller 4 controls the encoding operation of the encoder 3 in accordance with the CM boundary information output from the CM boundary detector 1. The CM boundary detector 1 controls the operation so that intra-coding is performed at constant time intervals for fast forward/reverse play in reproduction and intra-coding of CM boundary position frames is also performed. If the CM boundary position frame coincides with the frame to be intra-coded at constant time intervals, the timing to perform intra-coding is shifted. By performing intra-coding of the CM boundary at timings differing from the regular intervals, the CM boundary information is embedded into the encoded data, and the video can be reproduced, giving consideration to the CM period.

Further, the CM period can also be picked out. To be more specific, the CM boundary position frame can be found from the encoded data in reproduction, and the CM boundary information can be inserted into the encoded data, so that the CM boundary information does not need to be recorded in an internal storage means (such as an internal memory and an internal hard disk) of the moving picture encoding device 101.

Furthermore, even when a recording medium (an optical disk, a magnetic disk, a transportable hard disk drive, a memory device, or the like) on which encoded data is recorded by the moving picture encoding device 101 of the first embodiment is played on a device other than the moving picture encoding device 101, the CM boundary can be considered in reproduction. If the recording medium on which encoded data is recorded by the moving picture encoding device 101 of the first embodiment is played by a moving picture reproducing device which does not consider the CM boundary information, the encoded data can be reproduced as usual.

Moreover, if the frame determined to be a CM boundary coincides with the frame to be intra-coded at constant time intervals, intra-coding is performed for a next frame or subsequent frames. Accordingly, the intra-coded frame including the CM boundary can be efficiently distinguished from the frame intra-coded at constant time intervals.

In addition, if the frame determined to be a CM boundary coincides with the frame to be intra-coded at constant time intervals, the operation can be controlled to perform intra-coding for a next frame or subsequent frames and to perform intra-coding of pictures as inter-coding. This allows the intra-coded frame including the CM boundary as a coefficient to be distinguished from the frame intra-coded at constant time intervals and a nearby intra-coded frame to be avoided, so that the efficiency of fast forward/reverse play in reproduction can be prevented from being reduced.

### SECOND EMBODIMENT

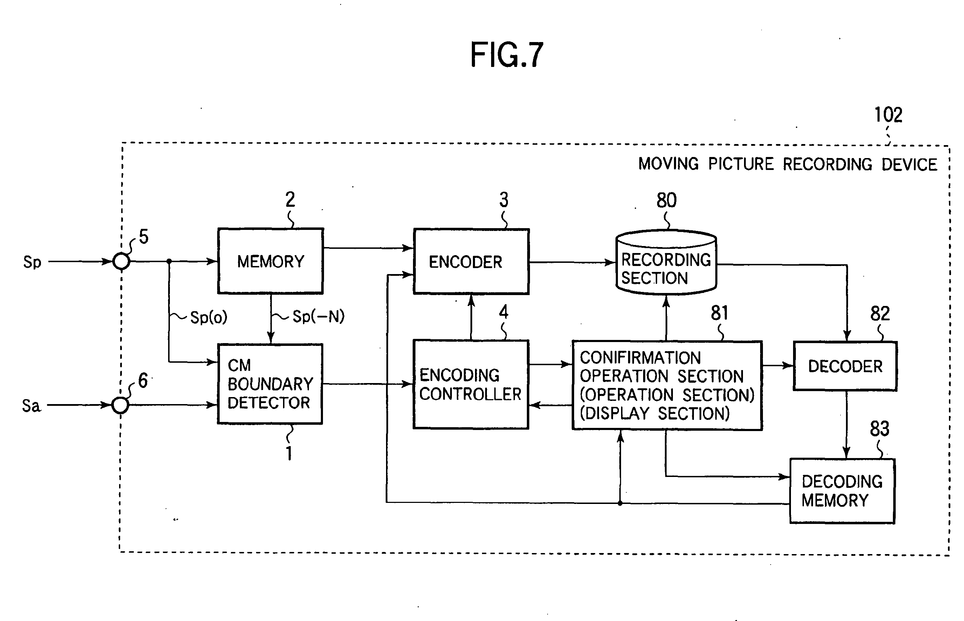

FIG. 7 is a schematic block diagram showing a configuration of a moving picture recording device 102 according to the second embodiment of present invention. The parts in FIG. 7 that are identical to or correspond to the parts in FIG. 1 are assigned identical reference characters.

As shown in FIG. 7, the moving picture recording device 102 according to the second embodiment includes a recording section 80, a confirmation operation section 81, a decoder 82, and a decoding memory 83, in addition to a CM boundary detector 1, a memory 2, an encoder 3, and an encoding controller 4, which are included in the moving picture encoding device 101 according to the first embodiment.

As shown in FIG. 7, the recording section 80 records encoded data (bit stream) output from the encoder 3 to store the encoded data. The confirmation operation section 81 includes an operation section which is used when a user operates the moving picture recording device 102 and a display section which presents the information about the moving picture recording device 102 to the user. The display section is not limited to a display monitor section provided on the moving picture recording device 102 and can be an image display monitor device which is a separate device from the moving picture recording device 102. Control signals are exchanged to each other between the encoding controller 4 and the confirmation operation section 81. The decoder 82 decodes encoded data read from the recording section 80. The decoding memory 83 stores decoded image data obtained by decoding of the decoder 82. The decoded image data output from the decoding memory 83 is sent to the confirmation operation section 81 and the encoder 3.

The operation of the moving picture recording device 102 according to the second embodiment will next be described with reference to FIG. 7. The encoding controller 4 outputs a CM boundary position frame (a frame number of the frame that was intra-coded not at constant time intervals) to the confirmation operation section 81. The confirmation operation section 81 displays a CM boundary position frame output from the encoding controller 4 on the display section. Since pictures before and after the CM boundary can be confirmed, it can be checked whether the CM boundary is actually positioned between a television program period and a CM period, by seeing the picture. Since the intra-coded picture is decoded, redundant decoding is not needed, and a decoded image can be obtained fast.

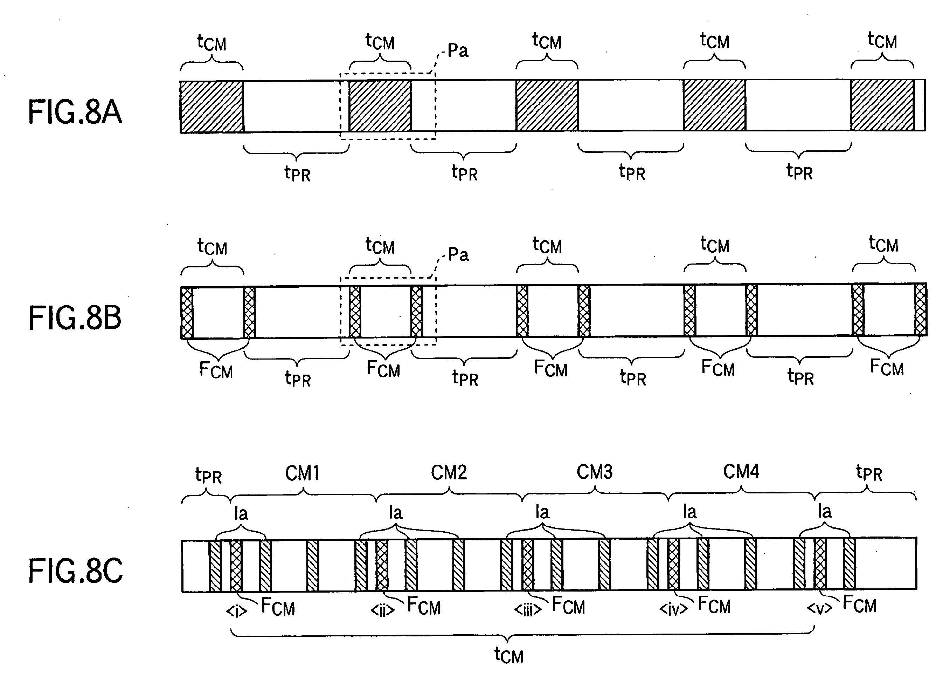

To be more specific, the confirmation operation section 81 displays the television program periods (white areas) t_{PR} and the CM periods (hatched areas) t_{CM} on its display section, by specifying the time base in the horizontal direction as shown in FIG. 8A, for example, in such a manner that the portions can be distinguished (i.e., visually distinguished by changing the color, brightness, pattern, shape, or the like, for example). If the continuity of CMs causes the CM boundary position frame (cross hatched areas <i> to <v> in FIG. 8C) to appear repeatedly at constant time intervals (of an assumed CM portion period such as 15 seconds and 30 seconds), a period between the CM boundary position frames <i> and <v> is displayed as a CM period. Through the confirmation operation section 81, the user can confirm that the CM period detected by the CM boundary detector 1 is appropriate.

FIG. 8B represents the state shown in FIG. 8A in a different style. FIG. 8B shows the top of the CM period and the top of the television program period (cross hatched areas in FIG. 8B).

FIG. 8C is a magnified view of a period Pa shown in FIGs. 8A and 8B. The period determined to be a CM period contains periodic intra-coded frames existing at constant time intervals and intra-coded frames of the CM boundary position frames determined to be CM boundaries. In FIG. 8C, a single CM period has four CM portions CM1, CM2, CM3 and CM4, and the top frames of CM portions CM1, CM2, CM3 and CM4 (cross hatched areas <i> to <iv> in FIG. 8C) are determined to be CM boundary position frames F_{CM}. The top frame of a television program immediately after the CM period (a cross hatched area <v> in FIG. 8C) is also a CM boundary position frame.

Further, the confirmation operation section 81 also allows the user to find a CM boundary position frame and preceding and succeeding intra-coded frames from the encoded data stored in the recording section 80. The encoded data of the intra-coded frame read from the recording section 80 is input to the decoder 82 and then decoded. The decoded image output from the decoder 82 is stored in the decoding memory 83. The decoded image read from the decoding memory 83 is input to the confirmation operation section 81, as operated by the confirmation operation section 81, and the user can check whether it is actually a CM period by confirming the images proceeding and succeeding the CM.

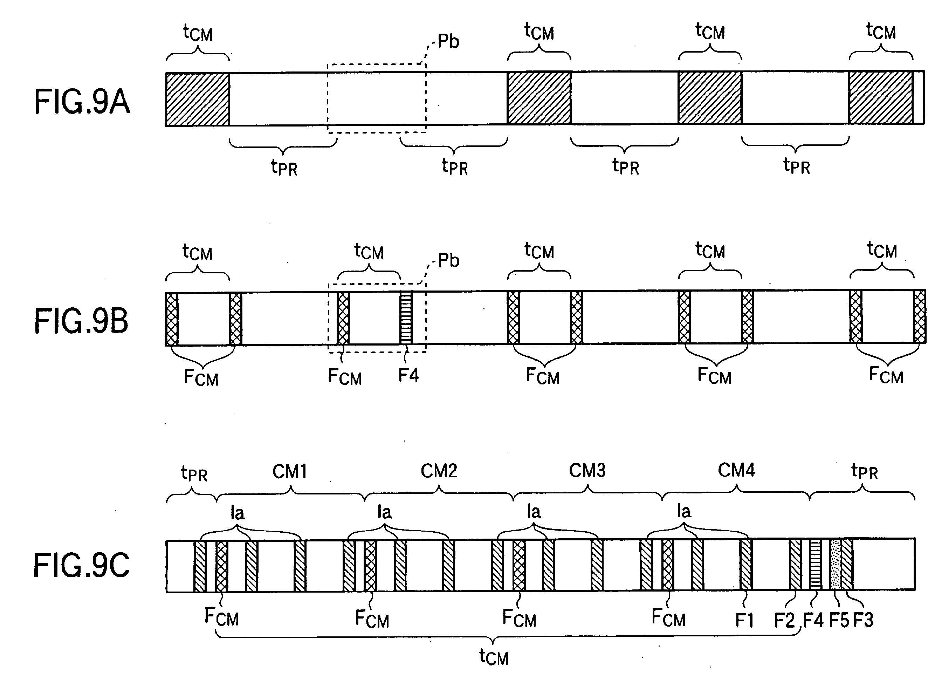

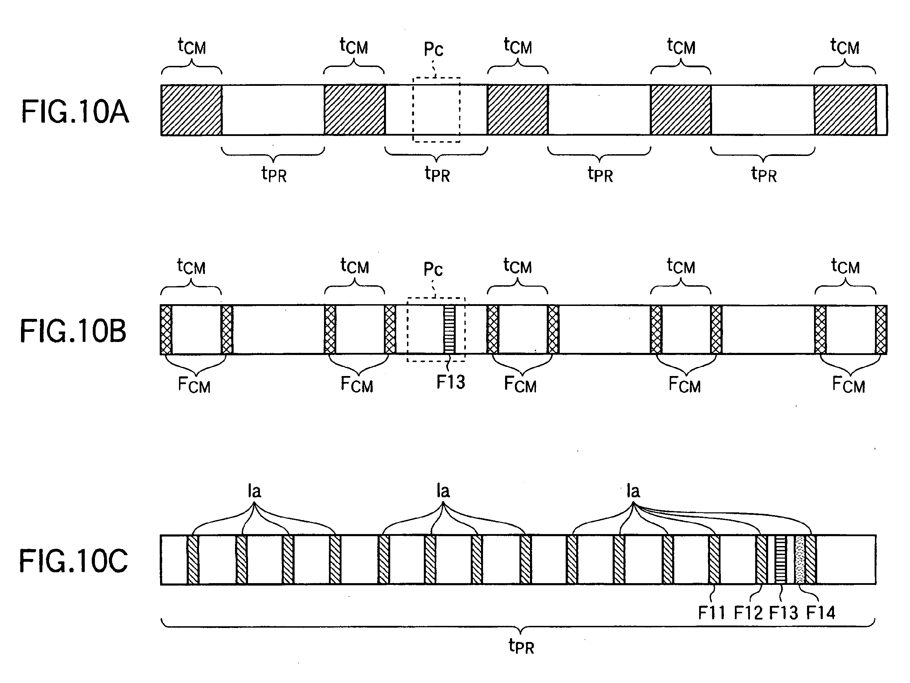

Examples including a misjudged CM boundary will be described with reference to FIGs. 9A, 9B and 9C and FIGS. 10A, 10B and 10C. FIGs. 9A, 9B and 9C show that an actual CM period is not determined to be a CM period. In this example, the confirmation operation section 81 is used as shown in FIG. 9A. When a TV drama or the like is broadcasted, a CM period occurs at a rate of once in about 10 minutes to 15 minutes. The user can recognize from the information displayed in the confirmation operation section 81 that a CM period is not displayed in the period where the CM period should be displayed, as shown in the period Pb in FIG. 9A.

FIG. 9B represents the state shown in FIG. 9A in another style. The CM boundary position frames F_{CM} at the top of the CM period and at the top of the television program period are shown in FIG. 9B. In the period Pb, the end of the CM period (CM boundary position frame corresponding to the top frame of the television program period) is not detected.

FIG. 9C is an enlarged view of the period Pb shown in FIGs. 9A and 9B. The period Pb includes periodic intra-coded frames existing at constant time intervals and intra-coded frames of the CM boundary position frames F_{CM} determined to be a CM boundary. The period has four CM portions CM1, CM2, CM3 and CM4, and a CM boundary position frame between the CM portion CM4 and the television program period t_{PR} is not determined. If the condition of a CM period judgment is that a set of four successive CM portions is determined to be a CM period, for example, it is judged that there is no CM period t_{CM} in the period Pb, as shown in FIG. 9A.

Further, if the frame between the CM portion CM2 and the succeeding CM portion CM3 is not determined to be a CM boundary position frame, a set of the CM portion CM2 and the CM portion CM3 would be assumed to be a single large CM portion and it would be assumed that there are three CM portions. If the condition of a CM period judgment is that a set of four successive CM portions is determined to be a CM period, as described earlier, the period Pb is not determined to be a CM period. Alternatively, if the total period of the CM portion CM2 and the CM portion CM3 exceeds an appropriate period of a single CM portion (a predetermined period such as 15 seconds or 30 seconds), the period Pb is not determined to be a CM period but determined to be a television program period t_{PR}.

When a misjudgment as described above occurs, the user can check the validity of the CM period through the confirmation operation section 81. If it is determined that a CM period is not provided in an appropriate period, the CM period can be confirmed by operating the confirmation operation section 81 to create intra-coded frames before and after the decoded image of the CM boundary by means of the decoder 82 and to display the decoded image on the confirmation operation section 81 through the decoding memory 83. After the confirmation is made, the CM period can be corrected by redoing encoding by the encoder 3 while changing the encoding method, which will be described later. A correction can be made after a CM boundary and a misjudgment are confirmed, so that data will not be erased by mistake in encoding.

On the contrary to FIGs. 9A, 9B and 9C, FIGs. 10A, 10B and 10C show an example in which something other than a CM period is determined to be a CM period (or CM boundary). The period Pc in FIG. 10A is a period in question. In the period Pc shown in FIG. 10B, a CM boundary is found as a result of a misjudgment. FIG. 10C is an enlarged view of the period Pc shown in FIGs. 10A and 10B. The period includes periodic intra-coded frames existing at constant time intervals and an intra-coded frame of the frame misjudged to be a CM boundary. Through the confirmation operation section 81, the user can judge the validity of the CM period (or CM boundary) in FIG. 10A or FIG. 10B, for example. The confirmation operation section 81 can also be operated to create a decoded image of the intra-coded frames preceding and succeeding the CM boundary by means of the decoder 82, and the decoded image can be displayed on the confirmation operation section 81 through the decoding memory 83, and then whether the CM boundary is correct can be confirmed. In this case, the CM boundary can be corrected by redoing encoding by the encoder 3 while changing the encoding method, as described later.

Next, the operation when a period, which should be determined as a CM period, is not determined as a CM period, as shown in FIGs. 9A, 9B and 9C, will be described. The user can check the CM period information in the encoded data through the confirmation operation section 81. The encoding controller 4 creates the CM period information from the position of a non-periodic intra-coded frame. Non-periodic intra-coding is performed in a frame (CM boundary position frame) immediately after discontinuity in video and sound determined to be a CM boundary by the CM boundary detector 1, such as a change from a television program period t_{PR} to a CM period, a change from the CM portion to another CM portion in a CM period, and a change from a CM period to a television program.

If a CM period is not found in an appropriate position where the CM period should exist (a period Pb in FIGs. 9A, 9B and 9C), the user can check the decoded image to see whether it is not a CM period, by the following operation. In the check operation, the confirmation operation section 81 is operated to select intra-coded frames (e.g., frames F1, F2, F3 and so on in FIG. 9C) in turn in the period Pb shown in Pb FIGs. 9A, 9B and 9C, and the recording section 80 is searched for the encoded data corresponding to the selected frames. The encoded data of the corresponding frame read from the recording section 80 is input to the decoder 82 and decoded. The decoded image data obtained by the decoder 82 are stored in the decoding memory 83. The user uses the confirmation operation section 81 to read the decoded image data from the decoding memory 83 and confirm the image contents. As a result of the confirmation, it is recognized that the frames F1 and F2 are included in the CM portion CM4, and the frame F3 is included in a television program period t_{PR}. The moving picture recording device 102 according to the second embodiment should have an intra-coded frame corresponding to the CM boundary position frame (F4 in FIGs. 9B and 9C) between a CM period and a television program period t_{PR,} but the frame is not found because of the misjudgment. In this case, the confirmation operation section 81 is used to encode the frame F4 by intra-coding. First, the confirmation operation section 81 is used to search for encoded data corresponding to the frame F2 from the recording section 80. The encoded data of the frame F2 found as a result of the search is read from the recording section 80 and supplied to the decoder 82. The decoder 82 obtains a decoded image as a result of decoding and outputs the image to the decoding memory 83. The confirmation operation section 81 reads the decoded image from the decoding memory 83 and display the image. Next, encoded data following the encoded data corresponding to the frame F2 are read from the recording section 80 and supplied to the decoder 82. The decoder 82 obtains a decoded image as a result of decoding and outputs the image to the decoding memory 83. The decoded image obtained here is an image corresponding to a frame succeeding the frame F2. The decoded image is supplied to and displayed in the confirmation operation section 81.

The decoding operation as described above is repeated to decode the frames F2, ..., F4, ..., and F5. The user recognizes through the confirmation operation section 81 that the decoded image corresponding to the frame F4 stored in the decoding memory 83 is the top frame of a television program period t_{PR}. Then, a change from inter-coding to intra-coding is selected on the confirmation operation section 81, so that the CM boundary position frame is recognized. The instruction to change from inter-coding to intra-coding is supplied from the confirmation operation section 81 to the encoding controller 4. At the same time, when the change is selected, the decoded image corresponding to the frame F4 is supplied from the decoding memory 83 to the encoder 3. When the instruction to perform intra-coding is received from the encoding controller 4, the encoder 3 intra-codes the decoded image corresponding to the frame F4 input from the decoding memory 83. The encoded data are output to the recording section 80. A decoded image corresponding to the frame F5 succeeding the frame F4 is also read after the frame F4 from the decoding memory 83, encoded (inter-coded) by the encoder 3 as controlled by the encoding controller 4, and output to the recording section 80. The new encoded data corresponding to the frames F4 to F5, input to the recording section 80, replace the old encoded data corresponding to the frames F4 to F5, stored in the recording section 80. The confirmation operation section 81 receives a renewed CM boundary position frame from the encoding controller 4 and displays the frame. Since the misjudgment is corrected, the CM boundary information shown in FIGs. 9A, 9B and 9C changes to the CM boundary information as shown in FIGs. 8A, 8B and 8C.

The operation when a frame, which is not a CM boundary, is determined to be a CM boundary as shown in FIGs. 10A, 10B and 10C will next be described. The user can confirm CM period information included in the encoded data, by using the confirmation operation section 81. The encoding controller 4 creates the CM period information from a position of a non-periodic intra-coded frame. Non-periodic intra-coding is performed in a frame (CM boundary position frame) immediately after discontinuity in video and sound, determined to be a CM boundary by the CM boundary detector 1, such as a change from a television program period t_{PR} to a CM period, a change from a CM portion to another CM portion in a CM period, and a change from a CM period to a television program period t_{PR}.

If a CM boundary is determined to be outside a CM period (period Pc in FIGs. 10A, 10B and 10C), the user can check the decoded image to see whether it is a CM boundary or not, by the following operation. With the confirmation operation section 81, an intra-coded frame (e.g., the frames F11, F12, F13, ...) in the period Pc shown in FIGs. 10A, 10B and 10C is selected. The encoded data corresponding to the selected frame is found from the recording section 80. The encoded data of the frame read from the recording section 80 is input to the decoder 82 and then decoded. The decoded image data obtained by the decoder 82 are stored in the decoding memory 83. The user operates the confirmation operation section 81 to read the decoded image data from the decoding memory 83 and to display the image on the confirmation operation section 81, and confirms the contents of the image. As a result of the confirmation, all of the frames F11 to F14 are determined to be frames in the television program period t_{PR}. As a result of a misjudgment, however, the television program period t_{PR} contains a non-periodic intra-coded frame (the frame F13 shown in FIGs. 10B and 10C), which should be inserted into the CM boundary position frame and should not exist in the television program period t_{PR}. In this case, the confirmation operation section 81 is controlled to encode the frame F13 by inter-coding. First, the confirmation operation section 81 is used to search for the encoded data corresponding to the frame F12 through the recording section 80. The encoded data of the frame F12 found as a result of search are read from the recording section 80 and supplied to the decoder 82. The decoder 82 outputs the decoded image obtained by decoding to the decoding memory 83. The confirmation operation section 81 reads the decoded image from the decoding memory 83 and then displays the image. Next, the encoded data succeeding the encoded data corresponding to the frame F12 are read from the recording section 80 and input to the decoder 82. The decoded image obtained here is an image corresponding to a frame succeeding the frame F12. The decoded image is input to and displayed in the confirmation operation section 81.

The decoding operation as described above is repeated to decode the frames F12 to F14. It is determined through the confirmation operation section 81 that the decoded image corresponding to the frame F13 stored in the decoding memory 83 is still a frame of a television program period t_{PR}. Then, the confirmation operation section 81 selects processing for changing the coding from intra-coding to inter-coding so that the frame is not determined as a CM boundary position frame. The instruction to change the coding from intra-coding to inter-coding is supplied from the confirmation operation section 81 to the encoding controller 4. At the same time, when the change processing is selected, the decoded image corresponding to the frame F12 which was intra-coded before is supplied from the decoding memory to the encoder 3. When an instruction to perform intra-coding by the encoding controller 4 is given, the encoder 3 encodes the decoded image corresponding to the frame F12 supplied from the decoding memory 83 by intra-coding. The encoded data is output to the recording section 80. The decoded image corresponding to the frame F14, after the frame F12 is also read from the decoding memory 83 after the frame F12, encoded (inter-coded) by the encoder 3 as controlled by the encoding controller 4, and output to the recording section 80. The new encoded data corresponding to the frames F12 to F14 input to the recording section 80 replace the old encoded data corresponding to the frames F12 to F14 stored in the recording section 80. However, just the encoded data of the frames F13 to F14 are renewed. The confirmation operation section 81 receives the renewed CM boundary position frame from the encoding controller 4 and displays the frame. Since the misjudgment is corrected, the CM boundary information shown in FIGs. 10A, 10B and 10C changes to the CM boundary information shown in FIGs. 8A, 8B and 8C.

Another method of encoding an intra-coded frame (the frame F13 in FIG. 10C) by inter-coding by means of the encoder 3 will next be described. First, the confirmation operation section 81 is used to search for encoded data corresponding to the frame F13 through the recording section 80. The encoded data of the frame F13 found as a result of search is read from the recording section 80 and supplied to the decoder 82. The decoder 82 outputs a decoded image obtained as a result of decoding to the decoding memory 83. The confirmation operation section 81 reads the decoded image from the decoding memory 83 and then displays the image. At the same time, the decoded image corresponding to the frame F13 is supplied from the decoding memory to the encoder 3. The encoder 3 performs picture-type inter-coding and macroblock-type intra-coding of the decoded image corresponding to the frame F13 input from the decoding memory 83, in the encoding method (picture-type inter-coding and macroblock-type intra-coding) controlled by the encoding controller 4. The encoded data are output to the recording section 80. In this case, the continuity of encoded data from the frame F13 to the frame F14 succeeding the frame F13 is maintained, so that decoding and encoding of the frame F14 succeeding the frame F13 is not necessary. Accordingly, just the encoded data corresponding to the frame F13 are updated. The confirmation operation section 81 receives the renewed CM boundary position frame from the encoding controller 4 and displays the frame. Since the misjudgment is corrected, the CM boundary information shown in FIGs. 10A, 10B and 10C is changes to the CM boundary information shown in FIGs. 8A, 8B and 8C.

As has been described above, in the moving picture recording device 102 according to the second embodiment, the encoding method of the encoder 3 is controlled in accordance with the CM boundary information output from the CM boundary detector 1. Periodic intra-coding is performed for fast forward/reverse play in reproduction, and intra-coding is also performed for the CM boundary position frame. The confirmation operation section 81 displays the CM boundary position frame to inform the user of the CM period, and the user can judge whether the CM period displayed through the confirmation operation section 81 is appropriate.

Further, if a misjudgment is determined to be included, the CM boundary information can be embedded into the encoded data by performing minimum decoding and encoding (about one cycle of periodic intra-coding performed in normal operation).

Furthermore, if a CM boundary and a misjudgment are determined to be included, a correction can be made after they are confirmed, and data will not be erased by mistake in encoding.

Moreover, since redundant intra-coding can be avoided, the efficiency of fast forward/reverse play in reproduction can be prevented from being reduced.

### THIRD EMBODIMENT

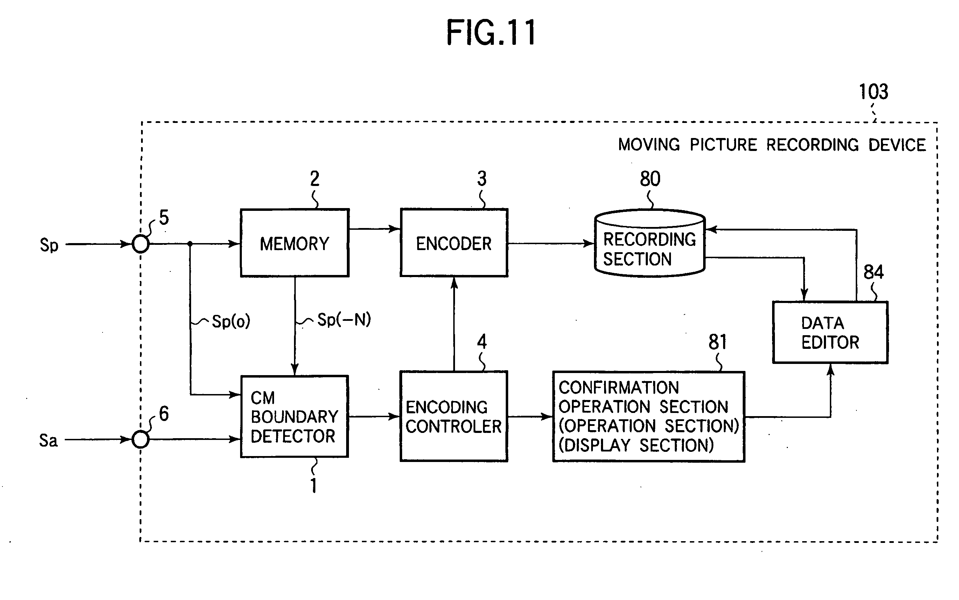

FIG. 11 is a schematic block diagram showing a configuration of a moving picture recording device 103 according to the third embodiment of the present invention. The parts in FIG. 11 that are identical to or correspond to the parts in FIG. 1 (the first embodiment) are assigned identical reference characters. As shown in FIG. 11, the moving picture recording device 103 according to the third embodiment includes a recording section 80, a confirmation operation section 81, and a data editor 84 in addition to a CM boundary detector 1, a memory 2, an encoder 3, and an encoding controller 4, which are included in the moving picture encoding device 101 according to the first embodiment.

As shown in FIG. 11, the recording section 80 records and saves the encoded data (bit stream) output from the encoder 3. The confirmation operation section 81 includes an operation section which is used by the user to operate the moving picture recording device 103 and a display section which provides the user with the information about the moving picture recording device 103. The display section is not limited to a display monitor section included in the moving picture recording device 102 and can be an image display monitor device apart from the moving picture recording device 102. The encoding controller 4 and the confirmation operation section 81 exchange control signals to each other. The data editor 84 edits the encoded data stored in the recording section 80, as operated by the confirmation operation section 81. The edited encoded data are recorded in the recording section 80.

The operation of the moving picture recording device 103 according to the third embodiment will next be described with reference to FIG. 11. The encoding controller 4 outputs a CM boundary position frame (a frame number of a non-periodic intra-coded frame) to the confirmation operation section 81. The confirmation operation section 81 displays the CM boundary position frame output from the encoding controller 4 on its display section.

To be more specific, the confirmation operation section 81 displays the television program periods (white areas) and the CM periods (hatched areas) on its display section, by specifying the time base in the horizontal direction as shown in FIG. 8A. If the continuity of CMs causes the CM boundary position frame (cross hatched areas <i> to <v> in FIG. 8C) to appear repeatedly at constant time intervals (assumed CM portion period such as 15 seconds or 30 seconds), the period is displayed as a CM period. Through the confirmation operation section 81, the user can confirm that the CM period detected by the CM boundary detector 1 is appropriate.

FIG. 8B represents the state shown in FIG. 8A in a different style. FIG. 8B shows the CM boundary position frames at the top of the CM period and at the top of the television program period (cross hatched areas in FIG. 8B).

FIG. 8C is an enlarged view of the period Pa shown in FIGs. 8A and 8B. The period determined to be a CM period contains periodic intra-coded frames existing at constant time intervals and intra-coded frames of the CM boundary position frames determined to be CM boundaries. In FIG. 8C, a single CM period has four CM portions CM1, CM2, CM3 and CM4, and the top frames of CM portions CM1, CM2, CM3 and CM4 (cross hatched areas <i> to <iv> in FIG. 8C) are determined to be CM boundary position frames. The top frame of a television program immediately after the CM period (cross hatched area <v> in FIG. 8C) is also a CM boundary position frame.

After confirming through the confirmation operation section 81 that the CM period is appropriate, the user can perform editing to combine the television program periods. To be more specific, as shown in FIG. 12A, the encoded data (hatched areas) corresponding to periods other than the television program periods t_{PR} are deleted from the actual encoded data.

The operation in the example shown in FIG. 12A will be described. The confirmation operation section 81 judges a CM period in accordance with non-periodic intra-coded frames and displays the CM periods as shown in FIG. 12A. The user confirms the CM periods through the confirmation operation section 81, and if the user whishes to edit for combining the television program periods, the confirmation operation section 81 is used to output a television program period connection request to the data editor 84. When the television program period connection request is received from the confirmation operation section 81, the data editor 84 reads the encoded data in recording units from the recording section 80 and records just the television program periods in the recording section 80. Since the frame immediately after the CM period (top frame of the television program period) is encoded by the intra-coding method, the encoded data can be combined without re-encoding. The confirmation operation section 81 displays the combined (connected) television program periods as shown in FIG. 12B. In this case, encoded data of a moving picture formed by combining the television program periods can be created. Since re-encoding is not required, the picture quality will not be degraded.

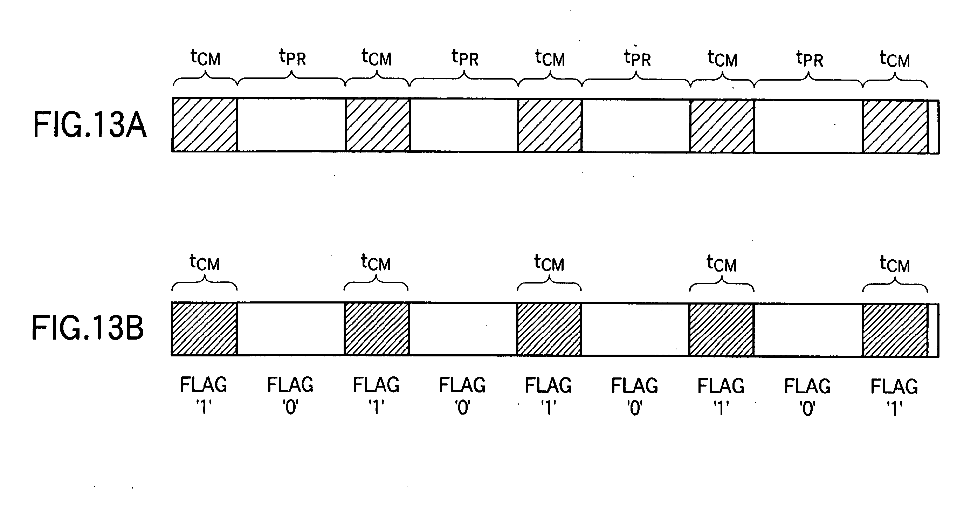

Further, after the validity of the CM period is confirmed through the confirmation operation section 81, the user can mask (or hide) the CMs. To be more specific, the image encoded data stored in the recording section 80 as shown in FIG. 13B are multiplexed together with the sound encoded data stored separately in the recording section 80 by a controller, which is not shown, and stored as a system file (file format) such as MP4. In the meantime, a flag (FLAG) representing a CM period is provided and embedded in the system file. In reproduction, the FLAG is checked, and reproduction and a skip are controlled in accordance with the FLAG. If the user gives an instruction to connect the television program periods t_{PR} through the confirmation operation section 81, the data editor 84 adds a FLAG for skipping the encoded data of a picture corresponding to a CM period. The CM period can be skipped in accordance with the FLAG information. Since no recorded moving picture is deleted, there is no danger that a part of the important moving picture is erased by mistake.

The operation in the example shown in FIGs. 13A and 13B will be described. The confirmation operation section 81 judges a CM period from non-periodic intra-coded frames and displays the CM period as shown in FIG. 13A. After the CM period is confirmed through the confirmation operation section 81, the user outputs a request to skip the CM period in reproduction as a CM period mask request to the data editor 84. When the CM period mask request is received from the data editor 84, the data editor 84 reads the encoded data in recording units from the recording section 80, sets a FLAG representing a CM period for the encoded data corresponding to the CM period, and performs multiplexing with the FLAG added. In FIG. 13B, FLAG = '1' for a CM period, and FLAG = '0' for a television program period t_{PR}, but the present invention is not limited to this case. If the encoded data stored in the recording section 80 has already been multiplexed and if the system file has any FLAG parameter, the FLAG of the encoded data corresponding to the CM period is changed from '0' to '1'. If no FLAG parameter is provided, a new one is added. The confirmation operation section 81 displays that the FLAG of the CM period is changed to '1', as shown in FIG. 13B.

As has been described above, with the moving picture recording device 103 according to the third embodiment, after the CM period displayed in the confirmation operation section 81 is checked, the television program periods can be combined and reproduced.

### FOURTH EMBODIMENT

In the third embodiment, after checking the CM period displayed in the confirmation operation section 81, the editing operation for combining the television program periods is performed. However, by using the moving picture recording device 103 shown in FIG. 11 and by operating in the similar manner to the third embodiment, the television program periods can be removed and the CM periods can be combined. Since the operation until the validity of the CM period is confirmed by the confirmation operation section 81 of the moving picture recording device 103 shown in FIG. 11 is the same as in the third embodiment, the description of the operation is omitted.

After the validity of the CM period is confirmed through the confirmation operation section 81, the user can delete the television program periods. To be more specific, the encoded data corresponding to the television program periods t_{PR} (unhatched areas) are deleted from the actual encoded data, as shown in FIG. 12C.

The operation of the example shown in FIG. 12C will be described. The confirmation operation section 81 judges a CM period from non-periodic intra-coded frames and displays the CM period as shown in FIG. 12C. After the CM period is confirmed through the confirmation operation section 81, if the television program periods should be actually deleted from the encoded data, the user uses the confirmation operation section 81 to output a television program period deletion request to the data editor 84. When receiving the television program period deletion request from the confirmation operation section 81, the data editor 84 reads the encoded data in recording units from the recording section 80, deletes encoded data corresponding to a period other than the CM period, and then records the data in the recording section 80. Since the top frame of each of the recorded CM periods is encoded by an intra-coding method, the encoded data can be combined without re-encoding. The confirmation operation section 81 displays the CM periods that are combined (or connected) to each other as shown in FIG. 12D. In this case, the encoded data of a moving picture made by the combined CM periods can be created and the re-encoding is not required, so the picture quality will not be degraded.

After the validity of the CM period is confirmed through the confirmation operation section 81, the user can mask (or hide) a television program period. The operation is the same as the operation of the third embodiment described with reference to FIGs. 13A and 13B, except that a period when FLAG = '0' (i.e., a television program period) is skipped in the reproduction. As has been said, since the television program period can be skipped in accordance with the FLAG information and the recorded moving picture is not deleted, there is no danger that a part of the important CM picture will be deleted by mistake.

As has been described above, with a moving picture recording device 103 according to the fourth embodiment, after the CM period displayed in the confirmation operation section 81 is checked, it is possible to edit the CMs by combining only the CMs and to reproduce the combined CMs.

### FIFTH EMBODIMENT

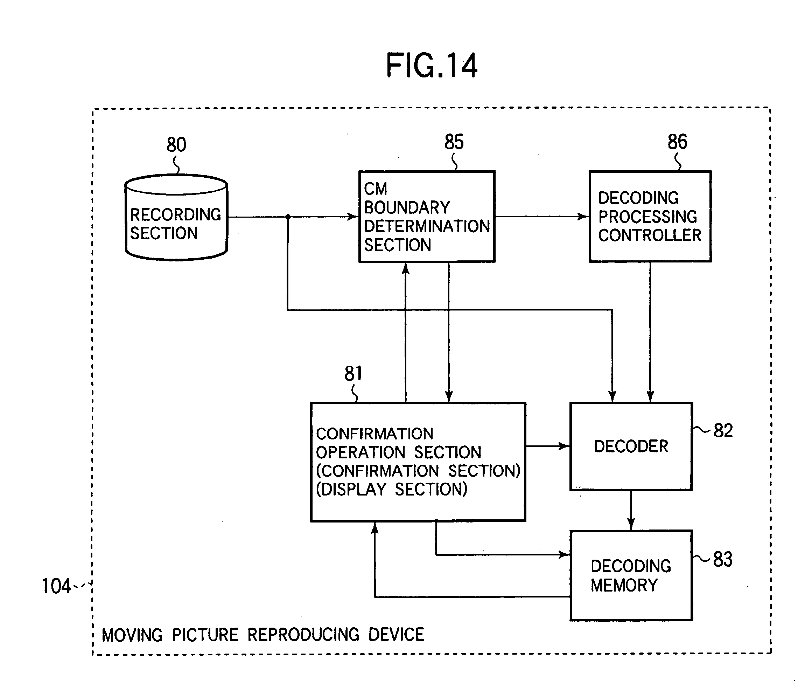

FIG. 14 is a schematic block diagram showing a configuration of a moving picture reproducing device 104 according to the fifth embodiment of the present invention. As shown in FIG. 14, the moving picture reproducing device 104 according to the fifth embodiment includes a recording section 80 for storing encoded data (bit stream), a CM boundary determination section 85 for determining a CM boundary in the encoded data read from the recording section 80, a decoding processing controller 86 for controlling the decoder 82 by using the result of determination output from the CM boundary determination section 85, a decoder 82 for decoding the encoded data read from the recording section 80 in accordance with a control signal output from the decoding processing controller 86, a decoding memory 83 for storing a decoded image decoded by the decoder 82, and a confirmation operation section 81 providing the user who operates the moving picture reproducing device 104 with an operation system and a display system.

Next, the operation of the moving picture reproducing device 104 according to the fifth embodiment will be described with reference to FIG. 14. The encoded data is stored beforehand in the recording section 80 by a control means, which is not shown in the figures. When a moving picture reproduction instruction is given from the confirmation operation section 81, the CM boundary determination section 85 reads the encoded data from the recording section 80 and determines a CM boundary. The result of determination by the CM boundary determination section 85 is input to the decoding processing controller 86. The decoding processing controller 86 controls the decoder 82 by using the result of determination input from the CM boundary determination section 85. The decoder 82 decodes the encoded data read from the recording section 80 in accordance with the control signal output from the decoding processing controller 86. The decoded image data obtained as a result of decoding by the decoder 82 are stored in the decoding memory 83. The decoded image data are read from the decoding memory 83 and supplied to the confirmation operation section 81 to be displayed.

The determination of a CM boundary will next be described. As has already been described in the first embodiment and the second embodiment, in moving picture encoding, a moving picture is intra-coded at constant time intervals, and in addition, the frame that is determined to be a CM boundary is also intra-coded. Accordingly, non-periodic intra-coded frames can be judged as being CM boundaries. The encoded data are as shown in FIGs. 8A, 8B and 8C, for example. If the CM boundary determination section 85 determines that the reproduced frame is a CM boundary position frame (a frame indicated by <i> in FIG. 8C) in the middle of moving picture reproduction, the decoding processing controller 86 stops the decoding by the decoder 82 after the CM boundary position frame is decoded, in accordance with the result of determination made by the CM boundary determination section 85. The decoded image of the CM boundary position frame is stored in the decoding memory 83, read, and displayed in the confirmation operation section 81. The user can recognize a change from a television program period to a CM and can confirm the contents of the frame <i> after the change. After the user checks the confirmation operation section 81, if the frame <i> is determined to be a CM period, the confirmation operation section 81 is operated to skip decoding up to the next CM boundary position frame <ii>. In accordance with the operation of the confirmation operation section 81, the CM boundary determination section 85 searches for encoded data stored in the recording section 80 and judges the CM boundary position frame <ii>. In accordance with the result of determination by the CM boundary search section 85, the decoding processing controller 86 reads the intra-coded data corresponding to the CM boundary position frame <ii> from the recording section 80, the decoder 82 decodes the encoded data and stores the data in the decoding memory 83. The decoded image stored in the decoding memory 83 is displayed in the confirmation operation section 81. The same processing is performed for the intra-coded CM boundary position frames <ii>, <iii>, <iv> and <v>, and the decoded image is output to the confirmation operation section 81. Through the confirmation operation section 81, the user can check whether the CM boundary is in a television program period (a frame indicated by <v> in FIG. 8C) or a CM period (the frames <ii>, <iii> and <iv> in FIG. 8C). If the boundary is in a CM period, just the intra-coded frames are reproduced up to the next CM boundary. If the boundary is in a television program period, the television program periods can be combined and reproduced in normal reproduction.

Further, in the operation described above, if the confirmation operation section 81 is operated to skip the decoding without performing the decoding process when the confirmation operation section 81 confirms that the frame is a television program period and is operated to perform the normal reproduction operation when the confirmation operation section 81 confirms that the frame is a CM period, the CM periods can be combined and reproduced in the similar manner to the normal reproduction operation.

Furthermore, as has been described in the third and fourth embodiments, the CM boundary determination section 85 can also distinguish the CM periods in accordance with the system file stored in the recording section 80. In FIGs. 13A and 13B, the frame is determined to be a CM period when FLAG = '1', and the result of determination is output to the decoding processing controller 86. The decoding processing controller 86 controls the decoder 82 to skip decoding of the frame determined to be a CM period as a result of CM period determination output from the CM boundary determination section 85. Accordingly, the decoder 82 reads the encoded data corresponding to the television program periods (periods when FLAG = '0') from the recording section 80 to decode the read encoded data. Even when the encoded data corresponding to a CM period are skipped, since the top frame immediately after the CM period is intra-coded, decoding from the top frame is possible.

The operation to skip the television program periods and connect the CM periods will next be described. When FLAG = '1', the frame is determined to be a CM period, and the result of determination is output to the decoding processing controller 86. The decoding processing controller 86 controls the decoder 82 to skip the decoding of frames other than the frame determined to be a CM period as a result of CM period determination output from the CM boundary determination section 85. Accordingly, the decoder 82 reads the encoded data corresponding to a CM period (period when FLAG = '1') from the recording section 80 to decode the read encoded data. Even when the encoded data corresponding to a period other than the CM period is skipped, since the top frame immediately after the CM period is intra-coded, the decoding from the top frame is possible.

As has been described above, the moving picture reproducing device 104 according to the fifth embodiment can detect an intra-coded frame other than the periodic intra-coded frames existing at constant time intervals and can reproduce the detected frame as a CM boundary. With the moving picture reproducing device 104 according to the fifth embodiment, CM boundaries can be easily found from the encoded data, and the CM periods can be combined or the CM periods can be skipped in reproduction.

In the devices according to the first to fifth embodiments, the concept of what is referred to as a "frame" includes a "field" of a television broadcast signal.

Further, in the devices according to the first to fifth embodiments, what is referred to as a "television broadcast program" includes a television broadcast recorded on a video recorder or a hard disk recorder and then output from them as well as a television broadcast input directly from the television.

Furthermore, the moving picture encoding device, the moving picture recording device, and the moving picture reproducing device of the present invention can be applied to a DVD (digital versatile disk) recorder, a DVD player, an HDD (hard disk drive) recording/reproducing device, and a hybrid recorder (a combined device of a DVD recording/reproducing device and an HDD recording/reproducing device), and the like.

Moreover, the moving picture encoding method implemented by the moving picture encoding device of the present invention, the moving picture recording method implemented by the moving picture recording device of the present invention, and the moving picture reproducing method implemented by the moving picture reproducing device of the present invention can be executed by an electronic information processing device such as a personal computer (PC) in accordance with an installed software program. The installation methods of the software program includes an installation method using an information recording medium such as a CD-ROM and a DVD-ROM having a recorded installer program and an installation method using downloading through a communication circuit such as the Internet.

## Claims

1. A moving picture encoding device comprising:
an encoding means (3) for encoding a broadcast signal of a television broadcast including a television program period and a commercial period that is other than the television program period, thereby outputting an encoded data of the broadcast signal;
an encoding control means (4) for controlling the encoding means (3) so as to intra-code periodic pictures at constant time intervals and to inter-code other pictures between the periodic intra-coded pictures; and
a commercial boundary detection means (1) for detecting a program-commercial boundary which includes a boundary when a television program period changes to a commercial period and a boundary when a commercial period changes to a television program period, thereby outputting program-commercial boundary information
***characterized in that***
the encoding control means (4) is adapted to control the encoding means (3) so as to intra-code a boundary position picture positioned on the program-commercial boundary in accordance with the program-commercial boundary information and, if the boundary position picture coincides with any one of the periodic pictures at constant time intervals to be intra-coded, to force the encoding means (3) to intra-code a pseudo-boundary position picture which is a picture positioned after a predetermined number of pictures from the any one of the periodic pictures to be intra-coded.

2. The moving picture encoding device according to claim 1, wherein the encoding control means (4) is adapted to control the encoding so that if the boundary position picture coincides with any one of the periodic pictures at constant time intervals to be intra-coded, any one of the periodic pictures, which coincides with the boundary position picture, is inter-coded.

3. The moving picture encoding device according to claim 1, wherein the boundary detection means is adapted to detect the boundary on the basis of scene change information detected based on a video signal of the broadcast signal and/or an audio signal of the broadcast signal.

4. A moving picture recording device comprising:
the moving picture encoding device recited in claim 1; and
a recording means for recording the encoded data output from the encoding means.

5. The moving picture recording device according to claim 4, further comprising:
an encoded data editing means for deleting encoded data corresponding to the television program period and combining encoded data corresponding to the commercial periods.

6. The moving picture recording device according to claim 4, further comprising:
an encoded data editing means for deleting encoded data corresponding to the commercial period and combining encoded data corresponding to the television program periods.

7. The moving picture recording device according to claims 5 or 6, further comprising:
a display means for displaying the encoded data so that the television program periods and the commercial periods are visually distinguishable.

## Patentansprüche

1. Codiervorrichtung für bewegte Bilder, welche aufweist:
ein Codiermittel (3) zum Codieren eines Rundsendesignals einer Fernseh-Rundsendung enthaltend eine Fernseh-Programmperiode und eine kommerzielle Periode, die eine andere als die Fernseh-Programmperiode ist, wodurch codierte Daten des Rundsendesignals ausgegeben werden;
ein Codiersteuermittel (4) zum Steuern des Codiermittels (3), für eine Intracodierung periodischer Bilder bei konstanten Zeitintervallen und eine Intercodierung anderer Bilder zwischen den periodischen intracodierten Bildern; und
ein Erfassungsmittel (1) für eine kommerzielle Grenze zum Erfassen einer Grenze zwischen Programmperiode und kommerzieller Periode, die eine Grenze, wenn eine Fernseh-Programmperiode in eine kommerzielle Periode wechselt, und eine Grenze, wenn eine kommerzielle Periode in eine Fernseh-Programmperiode wechselt, enthält, wodurch Informationen über die Grenze zwischen Programmperiode und kommerzieller Periode ausgegeben werden,
**dadurch gekennzeichnet, dass**
das Codiersteuermittel (4) ausgebildet ist zum Steuern des Codiermittels (3) derart, dass ein Grenzpositionsbild, das an der Grenze zwischen Programmperiode und kommerzieller Periode positioniert ist, gemäß den Informationen über die Grenze zwischen Programmperiode und kommerzieller Periode intracodiert wird, und, wenn das Grenzpositionsbild mit irgendeinem der periodischen Bilder bei konstanten Zeitintervallen, die intracodiert werden sollen, übereinstimmt, und
das Codiermittel (3) zwingt, ein Pseudogrenzpositionsbild zu intracodieren, das ein Bild ist,
das eine vorbestimmte Anzahl von Bildern nach dem irgendeinen der periodischen Bilder, die intracodiert werden sollen, positioniert ist.

2. Codiervorrichtung für bewegte Bilder nach Anspruch 1, bei der das Codiersteuermittel (4) ausgebildet ist zum Steuern der Codierung derart, dass, wenn das Grenzpositionsbild mit irgendeinem der periodischen Bilder bei konstanten Zeitintervallen, die intracodiert werden sollen, übereinstimmt, irgendeines der periodischen Bilder, das mit dem Grenzpositionsbild übereinstimmt, intercodiert wird.

3. Codiervorrichtung für bewegte Bilder nach Anspruch 1, bei der das Grenzerfassungsmittel ausgebildet ist zum Erfassen der Grenze auf der Grundlage von Szenenänderungsinformationen, die auf der Grundlage eines Videosignals des Rundsendesignals und/oder eines Audiosignals des Rundsendesignals erfasst wurden.

4. Aufzeichnungsvorrichtung für bewegte Bilder, welche aufweist:
die Codiervorrichtung für bewegte Bilder nach Anspruch 1; und
ein Aufzeichnungsmittel zum Aufzeichnen der von dem Codiermittel ausgegebenen codierten Daten.

5. Aufzeichnungsvorrichtung für bewegte Bilder nach Anspruch 4, weiterhin aufweisend:
ein Aufbereitungsmittel für codierte Daten zum Löschen codierter Daten entsprechend der Fernseh-Programmperiode und zum Kombinieren codierter Daten entsprechend den kommerziellen Perioden.

6. Aufzeichnungsvorrichtung für bewegte Bilder nach Anspruch 4, weiterhin aufweisend:
ein Aufbereitungsmittel für codierte Daten zum Löschen codierter Daten entsprechend der kommerziellen Periode und zum Kombinieren codierter Daten entsprechend den Fernseh-Programmperioden.

7. Aufzeichnungsvorrichtung für bewegte Bilder nach Anspruch 5 oder 6, weiterhin aufweisend:
ein Anzeigemittel zum Anzeigen der codierten Daten derart, dass die Fernseh-Programmperioden und die kommerziellen Perioden visuell unterscheidbar sind.

## Revendications

1. Dispositif de codage d'images animées comprenant :
des moyens de codage (3) destinés à coder un signal de diffusion d'une émission de télévision comprenant une période de programme de télévision et une période publicitaire qui est différente de la période de programme de télévision, en délivrant de ce fait en sortie des données codées du signal de diffusion ;
des moyens de commande de codage (4) destinés à commander les moyens de codage (3) de manière à intra-coder des images périodiques à intervalles de temps constants et à inter-coder d'autres images entre les images intra-codées périodiques ; et
des moyens de détection de limite de la publicité (1) destinés à détecter une limite programme / publicité qui comprend une limite où une période de programme de télévision change en une période publicitaire et une limite où une période publicitaire change en une période de programme de télévision, en délivrant de ce fait en sortie des informations de limite programme / publicité ;
**caractérisé en ce que :**
les moyens de commande de codage (4) sont adaptés de manière à commander les moyens de codage (3) de manière à intra-coder une image de position de limite positionnée sur la limite programme / publicité selon les informations de limite programme / publicité et, si l'image de position de limite coïncide, à des intervalles de temps constants, avec l'une quelconque des images périodiques à intra-coder, à forcer les moyens de codage (3) à intra-coder une image de position de pseudo-limite qui est une image positionnée après un nombre prédéterminé d'images à partir de l'une quelconque des images périodiques à intra-coder.

2. Dispositif de codage d'images animées selon la revendication 1, dans lequel les moyens de commande de codage (4) sont adaptés de manière à commander le codage de telle sorte que, si l'image de position de limite coïncide, à des intervalles de temps constants, avec l'une quelconque des images périodiques à intra-coder, l'une quelconque des images périodiques qui coïncide avec l'image de position de limite soit inter-codée.

3. Dispositif de codage d'images animées selon la revendication 1, dans lequel les moyens de détection de limite sont adaptés de manière à détecter la limite sur la base d'une information de modification de scène détectée sur la base d'un signal vidéo du signal de diffusion et / ou d'un signal audio du signal de diffusion.

4. Dispositif d'enregistrement d'images animées comprenant :
le dispositif de codage d'images animées selon la revendication 1 ; et
des moyens d'enregistrement destinés à enregistrer les données codées délivrées en sortie par les moyens de codage.

5. Dispositif d'enregistrement d'images animées selon la revendication 4, comprenant en outre :
des moyens d'édition de données codées destinés à effacer des données codées qui correspondent à la période de programme de télévision et à combiner des données codées qui correspondent à des périodes publicitaires.

6. Dispositif d'enregistrement d'images animées selon la revendication 4, comprenant en outre :
des moyens d'édition de données codées destinés à effacer des données codées qui correspondent à la période publicitaire et à combiner des données codées qui correspondent à des périodes de programme de télévision.

7. Dispositif d'enregistrement d'images animées selon la revendication 5 ou la revendication 6, comprenant en outre :
des moyens d'affichage destinés à afficher les données codées de telle sorte qu'il soit possible de distinguer de manière visuelle les périodes de programme de télévision et les périodes publicitaires.
